# EUROPÄISCHE PATENTSCHRIFT

(11) **EP 1 833 744 B1**
(45) Veröffentlichungstag und Bekanntmachung des Hinweises auf die Patenterteilung: **04.04.2012**
(21) Anmeldenummer: 05747565.9
(22) Anmeldetag: 21.04.2005
(51) Int. Cl.: B65G 43/02

(54) **EINRICHTUNG ZUR ZERSTÖRUNGSFREIEN INSPEKTION EINES FÖRDERGURTES**
DEVICE FOR THE NON-DESTRUCTIVE INSPECTION OF A CONVEYOR BELT
DISPOSITIF D'INSPECTION NON DESTRUCTIVE D'UNE COURROIE DE TRANSPORT

(30) Priorität: 21.12.2004 DE 102004061367
(43) Veröffentlichungstag der Anmeldung: 19.09.2007
(73) Patentinhaber: Phoenix Conveyor Belt Systems GmbH, 07422 Bad Blankenburg (DE)
(72) Erfinder: SCHNELL, Wolfgang, 21079 Hamburg (DE)
(74) Vertreter: Finger, Karsten
(86) Internationale Anmeldenummer: PCT/DE2005/000731
(87) Internationale Veröffentlichungsnummer: WO 2006/066519

(56) Entgegenhaltungen:
- EP-A- 0 716 991
- WO-A-00/53517
- DE-A1- 3 517 314
- DE-U1- 8 337 970
- PATENT ABSTRACTS OF JAPAN Bd. 2000, Nr. 13, 5. Februar 2001 (2001-02-05) -& JP 2000 292371 A (HITACHI MEDICAL CORP), 20. Oktober 2000 (2000-10-20)
- PATENT ABSTRACTS OF JAPAN Bd. 016, Nr. 451 (P-1424), 18. September 1992 (1992-09-18) & JP 04 158208 A (TOSHIBA CORP), 1. Juni 1992 (1992-06-01)

## Beschreibung

Die Erfindung betrifft eine Einrichtung zur zerstörungsfreien Inspektion eines Fördergurtes aus elastomerem Werkstoff mit einer Tragseite für das Fördermaterial und einer Laufseite sowie, mit einem eingebetteten Festigkeitsträger, wobei sich der Fördergurt bewegt, wobei ferner eine Strahlenquelle in Richtung Gurtoberfläche Strahlen aussendet, die derart energiereich sind, dass diese den Fördergurt durch strahlen. Hinsichtlich des Festigkeitlsträgertyps unterscheidet man Stahlseilfördergurte (St-Gurte), Textilfördergurte (Gewebegurte) sowie Aramidfördergurte (D-Gurte).

Die zerstörungsfreie Inspektion von Fördergurten erfolgt heute üblicherweise bei Stahlseilgurten mittels magnetinduktiver Verfahren, bei denen im Durchlaufverfahren Messwerte registriert werden, die Hinweise für das Vorhandensein von Unregelmäßigkeiten im Innern des Gurtes geben können. Die Durchführung dieser Untersuchungen und die Interpretation der Prüfergebnisse können nicht gleichzeitig durchgeführt werden und erfordern speziell geschultes Personal. Die Prüfergebnisse müssen zur genaueren Schadensanalyse durch Röntgenaufnahmen der verdächtigen Stelle im Gurt ergänzt werden. Diese Prüfungen werden von speziellen Serviceunternehmen durchgeführt, denen auch die Prüfeinrichtungen gehören. Das ganze Prozedere ist sehr aufwendig, zumal die Gurte nach der Inspektion wieder entmagnetisiert werden müssen.

Für Textilgurte wie auch Aramidgurte existiert kein vergleichbares Verfahren. Hier muss man sich mit einer optischen Inspektion der Oberfläche begnügen, bei der allerdings keine Information über die Beschaffenheit des Festigkeitsträgers gewonnen wird, es sei denn, der Schaden ist mit einer oberflächlichen Unregelmäßigkeit verbunden. Der Vorschlag, bei diesen Gurten die Breite messtechnisch zu überwachen (DE 101 40 920 A1) und bei einer Verringerung der Gurtbreite von der Annahme auszugehen, dass eine Schwächung des Festigkeitsträgers stattgefunden hat, weil sich an dieser Stelle der Gurt gelängt und dadurch auch seine Breite verringert hat, wurde bisher noch nicht in die Praxis umgesetzt.

Hinsichtlich des Standes der Inspektionstechnik von Fördergurten wird insbesondere auf die Druckschriften DE 35 17 314 A1 und WO 03/059789 A2 verwiesen, wobei im Folgenden auf die DE 35 17 314 A1 näher eingegangen wird.

Die DE 35 17 314 A1 beschreibt ein Verfahren, eine Einrichtung und eine Ausrüstung zum Überwachen, Untersuchen und Nachprüfen eines Fördergurtes. Dabei werden durchdringende Strahlen, wie Röntgenstrahlen, durch einen bewegten Fördergurt geleitet, wobei ein sichtbares bewegtes Bild von den durch den Fördergurt gelangenden Strahlen erzeugt wird. Es erfolgt ein visuelles Untersuchen des bewegten Bildes, gegebenenfalls nach einem Aufzeichnen, um den Zustand des Gurtinneren festzustellen. Normalerweise wird ein Röntgenröhren-Kopf benutzt, um die Strahlen durch den Fördergurt zu einem Fluoreszenzschirm zu leiten, der das Bild erzeugt. Das bewegte Bild kann mittels einer Videokamera aufgenommen werden.

Im Hintergrund der oben genannten Problematik unter Weiterentwicklung der Lehre gemäß DE 35 17 314 A1 besteht nun die Aufgabe der Erfindung darin, im Rahmen des Durchlaufverfahrens eine Einrichtung bereit zu stellen, die unabhängig vom Festigkeitsträgertyp und Dimension des Fördergurtes eine zerstörungsfreie Inspektion gewährleistet, die bei einer Reduzierung der Untersuchungszeit eine Nachprüfung überflüssig macht.

Gelöst wird die Aufgabe gemäß Kennzeichen des Patentanspruches 1 dadurch, dass
- ein Prozessrechner das Ergebnis der Durchstrahlungsprüfung auswertet;
- der gesamte Fördergurt in endliche Abschnitte unterteilt ist, wobei jeder Abschnitt mit einer eindeutigen Adresse versehen ist, so dass sich eine Abschnittsmarkierung bildet, wobei die Detektion der Adresse der jeweiligen Abschnittsmarkierung mittels einer Abtasteinheit berührungslos erfolgt; und dass
- die endlichen Abschnitte jeweils durch eine Startmarkierung begrenzt sind, wobei die Detektion der jeweiligen Startmarkierung mittels einer zweiten Abtasteinheit ebenfalls berührungslos erfolgt.

Zweckmäßige Ausgestaltungen der erfindungsgemäßen Einrichtung sind in den Patentansprüchen 2 bis 32 genannt.

Die Erfindung wird nun anhand eines besonders vorteilhaften Ausführungsbeispieles unter Bezugnahme auf eine schematische Zeichnung erläutert.

Die Einrichtung umfasst ein insbesondere transportables Tragegestell 3, das ein vierseitiger Tragrahmen ist, wobei der Fördergurt 1 (z.B. St-Gurt) in Bezug auf das Obertrumm innerhalb des Tragrahmens, insbesondere innerhalb dessen unteren Bereiches, sich bewegend verläuft. Die Strahlenquelle 4, die mit einem Steuergerät 12 verbunden ist, ist dabei am Oberteil des Tragrahmens angeordnet und erfasst dabei die gesamte Breite der Tragseite des Fördergurtes im materialfreien Zustand. Die Strahlenquelle sendet dabei energiereiche Strahlen aus, insbesondere in Form von Röntgenstrahlen oder γ-Strahlen. Die γ-Strahlenquelle ist dabei kostengünstiger und lässt sich auch leichter an die im Steinkohlenbergbau erforderlichen Ex-Schutzbedingungen (ATEX-Richtlinie) anpassen. Sie ist insbesondere für die Inspektion von St-Gurten geeignet. Die Verwendung einer Röntgenquelle hat wiederum den Vorteil, dass man die Energie der verwendeten Strahlung den Bedürfnissen anpassen kann und somit in der Lage ist, insbesondere auch Textilgurte zu untersuchen. Das Tragegestell 3 oder dessen näherer Bereich ist mit einer Strahlenschutzeinrichtung versehen.

Am Tragrahmen 3 ist unterhalb der Laufseite des Fördergurtes 1 ein Zeilensensor 5 mit Bildprozessor angeordnet, der mit der gegenüberliegenden Strahlenquelle 4 korrespondiert. Auf diese Weise lassen sich die Strahlen in optimaler Weise zeilenmäßig bündeln.

An einer der beiden Seitenteile des Tragrahmens 3 ist ferner ein Fehlermarkierungssystem **13** angeordnet, und zwar im Bereich zwischen der Tragseite und Laufseite des Fördergurtes **1.** Ferner ist das Fehlermarkierungssystem mit einem Steuergerät **14** gekoppelt. Das Fehlermarkierungssystem kann bei Erkennung einer Unregelmäßigkeit oder eines schwerwiegenden Schadens auf dem Gurt eine Markierung anbringen (z.B. Farbfleck), die ein schnelles und einfaches Wiederauffinden der Stelle auf dem Gurt ermöglicht.

In Verbindung mit der Strahlenquelle **4,** dem Zeilensensor **5** mit Bildprozessor und dem Fehlermarkierungssystem **13** kommen folgende Zusatzmaßnahmen zur Anwendung.

Zwei Startmarkierungen **6** umfassen bzw. begrenzen einen endlichen Abschnitt des Fördergurtes 1. Die Länge eines jeden Abschnittes beträgt 10 m bis 500 m, insbesondere unter dem Aspekt jeweils gleicher Längen.

Hinsichtlich der Startmarkierung **6** kommen folgende Varianten zum Einsatz:
- Die Startmarkierung ist durch wenigstens eine Kerbe, einen Farbstreifen, eine Reflexionszone, ein Metallteilchen oder einen Permanentmagneten gebildet.
- Die Startmarkierung ist ein Code, insbesondere unter dem Gesichtspunkt einer mechanischen, optischen, magnetischen, elektrisch leitenden oder radioaktiven Erfassung. Der Code ist wiederum vorzugsweise ein Barcode oder barcodeähnlich strukturiert. Auch kann der Code aus kleinen Dauermagneten bestehen, insbesondere in Form einer Reihenanordnung.

Die Detektion der jeweiligen Startmarkierung **6** erfolgt mittels einer Abtasteinheit, insbesondere in Form eines Lesekopfes **7,** berührungslos. Es ist dabei ausreichend, wenn eine einzige Abtasteinheit sämtliche Startmarkierungen detektiert.

Jeder endliche Abschnitt ist mit einer eindeutigen Adresse versehen, so dass sich eine Abschnittsmarkierung bildet. Die Eindeutigkeit wird durch eine Abschnittsnummerierung (z.B. 1, 2, 3 etc.) hergestellt.

Die Adresse der Abschnittsmarkierung ist hier ein Transponder **8.** Die Abtasteinheit, die die Detektion ebenfalls berührungslos vornimmt, umfasst eine Antenne **9** und ein Transponderlesegerät **11.** Ansonsten wird hier auf den allgemeiner Stand der Technik der Transpondertechnologie verwiesen.

Die Adresse der Abschnittsmarkierung kann auch diejenigen Varianten erfassen, die in Verbindung mit der Startmarkierung **6** bereits erwähnt worden sind, wobei dann die Abtasteinheit ebenfalls ein Lesekopf **7** ist, vorzugsweise im Rahmen eines gemeinsamen Detektionssystems von Start- und Abschnittsmarkierung.

Die Adresse der Abschnittsmarkierung sowie die Startmarkierung befinden sich innerhalb der Tragseite des Fördergurtes **1** in dessen Randbereich. Dabei ist es von Vorteil, wenn insbesondere der Transponder vollständig in elastomerem Werkstoff eingebettet ist. Dies gilt auch bei Verwendung eines Codes, und zwar in Form einer codierten Matrix (DE 100 17 473 A1).

Die Adresse der Abschnittsmarkierung und die Startmarkierung **6** sind hier separate Markierungssysteme, wobei sich die Adresse der Abschnittsmarkierung vorteilhafterweise in der Nähe der Startmarkierung befindet. Dabei ist es unerheblich, ob die Adresse in Bezug auf die Laufrichtung des Fördergurtes vor oder nach der Startmarkierung angeordnet ist.

Nach einer Variante (hier nicht dargestellt) bilden die Adresse der Abschnittsmarkierung und die Startmarkierung **6** ein einheitliches Markierungssystem, beispielsweise in Form eines Codes in Streifenform. Die gemeinsame Abtasteinheit ist dann ein Lesekopf.

Die exakte Ortsbestimmung erfolgt mit Hilfe eines Encoders, der vom Fördergurt **1** selbst, zum Beispiel mit Reibradkupplung, angetrieben wird. Im Rahmen des hier vorgestellten Ausführungsbeispieles wird der Encoder **10** über die Achse einer nicht angetriebenen Trommel **2** angetrieben. Der Encoder liefert für eine bestimmte Wegstrecke eine bestimmte Anzahl von elektrischen Impulsen. Diese Impulse werden mittels eines Zählers im Prozessrechner **15** erfasst und ergeben zusammen mit der Abschnittsmarkierung und der Adresse des Gurtabschnittes eine exakte Ortsinformation für jede Stelle des zu inspizierenden Fördergurtes. Die Genauigkeit der Ortsbestimmung hängt von der Auswahl des Encoders und der Genauigkeit der Bestimmung der Abschnittsmarkierung ab und kann sehr hoch sein. Genauigkeiten von einigen Zehntel Millimetern sind möglich.

Der Encoder kann beispielsweise ein Multipolencoder (DE 203 12 808 U1) oder ein opto-elektronischer Encoder sein. Diesbezüglich wird auf den allgemeinen Stand der Encodertechnologie verwiesen.

Der Prozessrechner **15** ist mit folgenden Einrichtungsteilen gekoppelt, nämlich mit:
- der Strahlenquelle **4** einschließlich deren Steuergerät **12;**
- dem Zeilensensor **5** mit Bildprozessor;
- dem Fehlermarkierungssystem **13** einschließlich dessen Steuergerät **14**;
- der ersten und zweiten Abtasteinheit im Rahmen eines separaten oder gemeinsamen Detektionssystems sowie
- dem Encoder **10.**

Der Prozessrechner **15** steht wiederum mit einem Monitor **16** in Verbindung, so dass eine automatisierte Bildauswertung gegeben ist.

### Bezugszeichenliste

- **1**: Fördergurt
- **2**: nicht angetriebene Trommel (Umkehr- bzw. Umlenktrommel)
- **3**: Tragegestell (Tragrahmen)
- **4**: Strahlenquelle
- **5**: Zeilensensor mit Bildprozessor
- **6**: Startmarkierung (Auslösemarkierung, Triggermarke) und gegebenenfalls Adresse der Abschnittsmarkierung
- **7**: Lesekopf
- **8**: Transponder
- **9**: Antenne für Transponder
- **10**: Encoder
- **11**: Transponderlesegerät
- **12**: Steuergerät für Strahlenquelle
- **13**: Fehlermarkierungssystem
- **14**: Steuergerät für Fehlermarkierungssystem
- **15**: Prozessrechner (Controller)
- **16**: Monitor

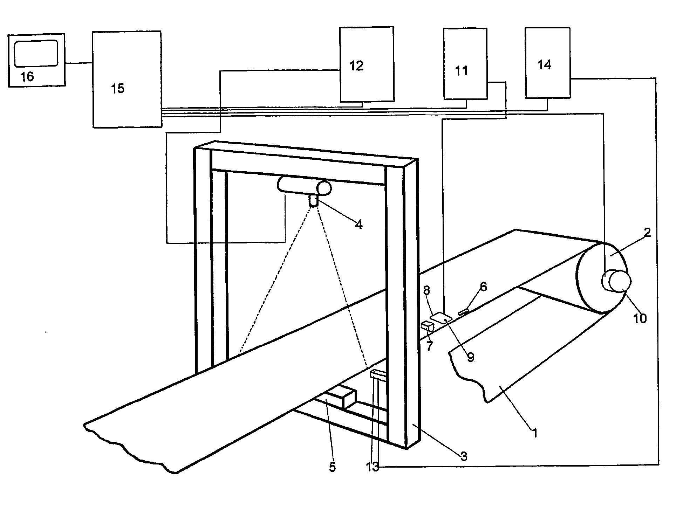

## Patentansprüche

1. Einrichtung zur zerstörungsfreien Inspektion eines Fördergurtes (1) aus elastomerem Werkstoff mit einer Tragseite für das Fördermaterial und einer Laufseite sowie mit einem, eingebetteten Festigkgsträger, wobei sich der Fördergurt bewegt, wobei ferner eine Strahlenquelle (4) in Richtung Gurtoberfläche Strahlen aussendet, die derart energiereich sind, dass diese den Fördergurt (1) durchstrahlen **dadurch gekennzeichnet, dass**
- ein Prozessrechner (15) das Ergebnis der Durchstrahlungsprüfung auswertet;
- der gesamte Fördergurt (1) in endliche Abschnitte unterteilt ist, wobei jeder Abschnitt mit einer eindeutigen Adresse versehen ist, so dass sich eine Abschnittsmarkierung bildet, wobei die Detektion der Adresse der jeweiligen Abschnittsmarkierung mittels einer ersten Abtasteinheit berührungslos erfolgt; und dass
- die endlichen Abschnitte jeweils durch eine Startmarkierung (6) begrenzt sind, wobei die Detektion der jeweiligen Startmarkierung mittels einer zweiten Abtasteinheit ebenfalls berührungslos erfolgt.

2. Einrichtung nach Anspruch 1, **dadurch gekennzeichnet, dass** die Strahlenquelle (4) Röntgenstrahlen oder γ-Strahlen aussendet.

3. Einrichtung nach Anspruch 1 oder 2, **dadurch gekennzeichnet, dass** die Strahlenquelle (4) die gesamte Breite des Fördergurtes (1) erfasst.

4. Einrichtung nach einem der Ansprüche 1 bis 3, **dadurch gekennzeichnet, dass** die Strahlenquelle (4) die Tragseite im materialfreien Zustand erfasst.

5. Einrichtung nach einem der Ansprüche 1 bis 4, **dadurch gekennzeichnet, dass** die Strahlenquelle (4) an einem insbesondere transportablen Tragegestell (3) untergebracht ist, insbesondere wiederum innerhalb dessen Oberteiles.

6. Einrichtung nach Anspruch 5, **dadurch gekennzeichnet, dass** das Tragegestell (3) ein vierseitiger Tragrahmen ist, wobei der Fördergurt (1) innerhalb des Tragrahmens, insbesondere innerhalb dessen unteren Bereiches, verläuft.

7. Einrichtung nach einem der Ansprüche 1 bis 6, **dadurch gekennzeichnet, dass** die Strahlenquelle (4) mit einem Steuergerät (12) gekoppelt ist.

8. Einrichtung nach einem der Ansprüche 1 bis 7, **dadurch gekennzeichnet, dass** die Strahlenquelle (4) mit einem gegenüberliegenden Zeilensensor (5) mit Bildprozessor korrespondiert, der unterhalb der Laufseite angeordnet ist.

9. Einrichtung nach Anspruch 8 in Verbindung mit Anspruch 5 oder 6, **dadurch gekennzeichnet, dass** der Zeilensensor (5) mit Bildprozessor am Tragegestell (3) angeordnet ist.

10. Einrichtung nach einem der Ansprüche 1 bis 9, **dadurch gekennzeichnet, dass** die Strahlenquelle (4) mit einem Fehlermarkierungssystem (13) korrespondiert.

11. Einrichtung nach Anspruch 10, **dadurch gekennzeichnet, dass** das Fehlermarkierungssystem (13) in Bezug auf den Fördergurt (1) seitlich angeordnet ist, und zwar im Bereich zwischen der Tragseite und Laufseite.

12. Einrichtung nach Anspruch 10 oder 11, **dadurch gekennzeichnet, dass** das Fehlermarkierungssystem (13) mit einem Steuergerät (14) gekoppelt ist.

13. Einrichtung nach einem der Ansprüche 10 bis 12 in Verbindung mit Anspruch 5 oder 6, **dadurch gekennzeichnet, dass** das Fehlermarkierungssystem (13) am Tragegestell (3) angeordnet ist.

14. Einrichtung nach einem der Ansprüche 1 bis 13, **dadurch gekennzeichnet, dass** die endlichen Abschnitte in einem Abstand von 10 bis 500 m Länge unterteilt sind.

15. Einrichtung nach einem der Ansprüche 1 bis 14, **dadurch gekennzeichnet, dass** sich die Adresse der Abschnittsmarkierung sowie die Startmarkierung (6) innerhalb der Gurtoberfläche, insbesondere innerhalb der Tragseite, in dessen Randbereich befinden.

16. Einrichtung nach einem der Ansprüche 1 bis 15, **dadurch gekennzeichnet, dass** die Adresse der Abschnittsmarkierung und die Startmarkierung (6) separate Markierungssysteme sind.

17. Einrichtung nach Anspruch 16, **dadurch gekennzeichnet, dass** sich die Adresse der Abschnittsmarkierung in der Nähe der Startmarkierung (6) befindet.

18. Einrichtung nach einem der Ansprüche 1 bis 15, **dadurch gekennzeichnet, dass** die Adresse der Abschnittsmarkierung und die Startmarkierung (6) ein einheitliches Markierungssystem bilden.

19. Einrichtung nach einem der Ansprüche 1 bis 18, insbesondere in Verbindung mit Anspruch 17 oder 18, **dadurch gekennzeichnet, dass** die Adresse der Abschnittsmarkierung ein Transponder (8) ist, wobei die erste Abtasteinheit eine Antenne (9) und ein Transponderlesegerät (11) umfasst.

20. Einrichtung nach einem der Ansprüche 1 bis 18, **dadurch gekennzeichnet, dass** die Adresse der Abschnittsmarkierung und/oder die Startmarkierung (6) durch wenigstens eine Kerbe, einen Farbstreifen, eine Reflexionszone, ein Metallteilchen oder einen Permanentmagneten gebildet ist/sind.

21. Einrichtung nach einem der Ansprüche 1 bis 18, **dadurch gekennzeichnet, dass** die Adresse der Abschnittsmarkierung und/oder die Startmarkierung (6) ein Code ist, insbesondere unter dem Gesichtspunkt einer mechanischen, optischen, magnetischen, elektrisch leitenden oder radioaktiven Erfassung.

22. Einrichtung nach Anspruch 21, **dadurch gekennzeichnet, dass** der Code ein Barcode oder barcodeähnlich strukturiert ist.

23. Einrichtung nach Anspruch 21, **dadurch gekennzeichnet, dass** der Code aus kleinen Dauermagneten besteht, insbesondere in Form einer Reihenanordnung

24. Einrichtung nach einem der Ansprüche 20 bis 23, **dadurch gekennzeichnet, dass** die erste und zweite Abtasteinheit ein gemeinsames Detektionssystem sind, insbesondere in Form eines Lesekopfes (7).

25. Einrichtung nach einem der Ansprüche 1 bis 24, **dadurch gekennzeichnet, dass** diese mit einem Encoder (10) versehen ist.

26. Einrichtung nach Anspruch 25, **dadurch gekennzeichnet, dass** der Encoder vom Fördergurt (1) selbst angetrieben wird.

27. Einrichtung nach Anspruch 25, **dadurch gekennzeichnet, dass** der Encoder (10) mit einem bewegbaren Teil der Förderanlage, die den Fördergurt (1) umfasst, in Verbindung steht.

28. Einrichtung nach Anspruch 27, **dadurch gekennzeichnet, dass** der Encoder (10) über die Achse einer nicht angetriebenen Trommel (2) angetrieben wird.

29. Einrichtung nach einem der Ansprüche 1 bis 28, **dadurch gekennzeichnet, dass** der Prozessrechner (15) mit wenigstens der Strahlenquelle (4), insbesondere mit weiteren Einrichtungsteilen der genannten Art, gekoppelt ist.

30. Einrichtung nach Anspruch 29, **dadurch gekennzeichnet, dass** der Prozessrechner (15) mit folgenden Einrichtungsteilen gekoppelt ist, nämlich mit:
- der Strahlenquelle (4), insbesondere in Verbindung mit Anspruch 7 über das Steuergerät (12);
- dem Zeilensensor (5) mit Bildprozessor;
- dem Fehlermarkierungssystem (13), insbesondere in Verbindung mit Anspruch 12 über das Steuergerät (14);
- der ersten und zweiten Abtasteinheit sowie
- dem Encoder (10).

31. Einrichtung nach einem der Ansprüche 1 bis 30, **dadurch gekennzeichnet, dass** der Prozessrechner (15) mit einem Monitor (16) gekoppelt ist.

32. Einrichtung nach einem der Ansprüche 1 bis 31, **dadurch gekennzeichnet, dass** eine Strahlenschutzeinrichtung vorgesehen ist, die insbesondere am Tragegestell (3) oder dessen näherem Bereich angeordnet ist.

## Claims

1. Device for the non-destructive inspection of a conveyor belt (1) made from an elastomeric material, having a carrying side for the conveyed material and a running side, and having an embedded strength carrier, the conveyor belt being moved, and a radiation source (4) also emitting, in the direction of the belt surface, beams which have enough energy to penetrate the conveyor belt (1), **characterized in that**
- a process control computer (15) evaluates the result of the penetration test;
- the entire conveyor belt (1) is subdivided into finite sections, each section being provided with a unique address so that a section marker is formed, the detection of the address of the respective section marker being performed without contact by means of a first scanning unit; and **in that**
- the finite sections are respectively bounded by a start marker (6), the detection of the respective start marker likewise being performed without contact by means of a second scanning unit.

2. Device according to Claim 1, **characterized in that** the beam source (4) emits X-ray beams or γ-beams.

3. Device according to Claim 1 or 2, **characterized in that** the beam source (4) detects the total width of the conveyor belt (1).

4. Device according to one of Claims 1 to 3, **characterized in that** the beam source (4) detects the carrying side in the material-free state.

5. Device according to one of Claims 1 to 4, **characterized in that** the beam source (4) is accommodated on a mounting structure (3), in particular a transportable one, in particular, once again, within its upper part.

6. Device according to Claim 5, **characterized in that** the mounting structure (3) is a four-sided supporting frame, the conveyor belt (1) running within the supporting frame, particularly within the lower region thereof.

7. Device according to one of Claims 1 to 6, **characterized in that** the beam source (4) is coupled to a control device (12).

8. Device according to one of Claims 1 to 7, **characterized in that** the beam source (4) corresponds to an oppositely situated line sensor (5) with image processor which is arranged below the running side.

9. Device according to Claim 8 in conjunction with Claim 5 or 6, **characterized in that** the line sensor (5) with image processor is arranged on the mounting structure (3).

10. Device according to one of Claims 1 to 9, **characterized in that** the beam source (4) corresponds to a defect marking system (13).

11. Device according to Claim 10, **characterized in that** the defect marking system (13) is arranged laterally with reference to the conveyor belt (1), specifically in the region between the carrying side and running side.

12. Device according to Claim 10 or 11, **characterized in that** the defect marking system (13) is coupled to a control device (14).

13. Device according to one of Claims 10 to 12 in conjunction with Claim 5 or 6, **characterized in that** the defect marking system (13) is arranged on the mounting structure (3).

14. Device according to one of Claims 1 to 13, **characterized in that** the finite sections are subdivided at a spacing of 10 to 500 m in length.

15. Device according to one of Claims 1 to 14, **characterized in that** the address of the section marker and the start marker (6) are located within the belt surface, in particular within the carrying side, in the edge region thereof.

16. Device according to one of Claims 1 to 15, **characterized in that** the address of the section marker and the start marker (6) are separate marking systems.

17. Device according to Claim 16, **characterized in that** the address of the section marker is located in the vicinity of the start marker (6).

18. Device according to one of Claims 1 to 15, **characterized in that** the address of the section marker and the start marker (6) form a standard marking system.

19. Device according to one of Claims 1 to 18, in particular in conjunction with Claim 17 or 18, **characterized in that** the address of the section marker is a transponder (8), the first scanning unit comprising an antenna (9) and a transponder reader (11).

20. Device according to one of Claims 1 to 18, **characterized in that** the address of the section marker and/or the start marker (6) are/is formed by at least a notch, a coloured strip, a reflection zone, a metal particle or a permanent magnet.

21. Device according to one of Claims 1 to 18, **characterized in that** the address of the section marker and/or the start marker (6) is a code, in particular from the point of view of a mechanical, optical, magnetic, electrically conducting or radioactive detection.

22. Device according to Claim 21, **characterized in that** the code is a barcode or is structured like a barcode.

23. Device according to Claim 21, **characterized in that** the code consists of small permanent magnets, in particular in the form of a series arrangement.

24. Device according to one of Claims 20 to 23, **characterized in that** the first and second scanning units are a joint detection system, in particular in the form of a reading head (7).

25. Device according to one of Claims 1 to 24, **characterized in that** said device is provided with an encoder (10).

26. Device according to Claim 25, **characterized in that** the encoder is driven by the conveyor belt (1) itself.

27. Device according to Claim 25, **characterized in that** the encoder (10) is connected to a movable part of the conveyor system which comprises the conveyor belt (1).

28. Device according to Claim 27, **characterized in that** the encoder (10) is driven via the axis of a non-driven drum (2).

29. Device according to one of Claims 1 to 28, **characterized in that** the process control computer (15) is coupled to at least the beam source (4), in particular to further device parts of the said type.

30. Device according to Claim 29, **characterized in that** the process control computer (15) is coupled to the following device parts, specifically to:
- the beam source (4), in particular in conjunction with Claim 7 via the control device (12) ;
- the line sensor (5) with image processor;
- the defect marking system (13), in particular in conjunction with Claim 12 via the control device (14);
- the first and second scanning units; and
- the encoder (10).

31. Device according to one of Claims 1 to 30, **characterized in that** the process control computer (15) is coupled to a monitor (16).

32. Device according to one of Claims 1 to 3 1 , **characterized in that** a radiation protection device is provided which is, in particular, arranged on the mounting structure (3) or the region very close to it.

## Revendications

1. Dispositif d'inspection non destructive d'une bande transporteuse (1) en matériau élastomère, comprenant un côté porteur pour le matériel transporté et un côté défilement ainsi qu'un support de consolidation intégré, la bande transporteuse se déplaçant, une source de rayonnement (4) émettant en outre des rayons en direction de la surface de la bande, lesquels présentent un niveau d'énergie suffisant pour traverser la bande transporteuse (1), **caractérisé en ce que**
- un ordinateur de traitement (15) interprète le résultat du contrôle radiographique ;
- l'ensemble de la bande transporteuse (1) est divisé en sections finies, chaque section étant dotée d'une adresse unique de manière à former un marquage de section, la détection de l'adresse du marquage de section correspondant s'effectuant sans contact au moyen d'une première unité de palpage ; et **en ce que**
- les sections finies sont respectivement délimitées par un marquage de début (6), la détection du marquage de début correspondant s'effectuant également sans contact au moyen d'une deuxième unité de palpage.

2. Dispositif selon la revendication 1, **caractérisé en ce que** la source de rayonnement (4) émet des rayons X ou des rayons γ.

3. Dispositif selon la revendication 1 ou 2, **caractérisé en ce que** la source de rayonnement (4) capte toute la largeur de la bande transporteuse (1).

4. Dispositif selon l'une des revendications 1 à 3, **caractérisé en ce que** la source de rayonnement (4) capte le côté porteur en l'absence de matériel.

5. Dispositif selon l'une des revendications 1 à 4, **caractérisé en ce que** la source de rayonnement (4) est logée sur un bâti porteur (3) qui est notamment transportable, notamment aussi à l'intérieur de sa partie supérieure.

6. Dispositif selon la revendication 5, **caractérisé en ce que** le bâti porteur (3) est un cadre porteur à quatre faces, la bande transporteuse (1) défilant à l'intérieur du cadre porteur, notamment à l'intérieur de sa zone inférieure.

7. Dispositif selon l'une des revendications 1 à 6, **caractérisé en ce que** la source de rayonnement (4) est connectée à un contrôleur (12).

8. Dispositif selon l'une des revendications 1 à 7, **caractérisé en ce que** la source de rayonnement (4) correspond avec un capteur de lignes (5) opposé muni d'un processeur d'image, qui est disposé au-dessous du côté défilement.

9. Dispositif selon la revendication 8, en relation avec la revendication 5 ou 6, **caractérisé en ce que** le capteur de lignes (5) muni du processeur d'image est monté sur le bâti porteur (3).

10. Dispositif selon l'une des revendications 1 à 9, **caractérisé en ce que** la source de rayonnement (4) correspond avec un système de marquage des défauts (13).

11. Dispositif selon la revendication 10, **caractérisé en ce que** le système de marquage des défauts (13) est disposé sur le côté par rapport à la bande transporteuse (1), à savoir dans la zone entre le côté porteur et le côté défilement.

12. Dispositif selon la revendication 10 ou 11, **caractérisé en ce que** le système de marquage des défauts (13) est connecté à un contrôleur (14).

13. Dispositif selon l'une des revendications 10 à 12, en relation avec la revendication 5 ou 6, **caractérisé en ce que** le système de marquage des défauts (13) est monté sur le bâti porteur (3).

14. Dispositif selon l'une des revendications 1 à 13, **caractérisé en ce que** les sections finies sont divisées à un écart de 10 à 500 m de long.

15. Dispositif selon l'une des revendications 1 à 14, **caractérisé en ce que** l'adresse du marquage de section ainsi que le marquage de début (6) à l'intérieur de la surface de la bande, notamment à l'intérieur du côté porteur, se trouvent dans sa zone de bordure.

16. Dispositif selon l'une des revendications 1 à 15, **caractérisé en ce que** l'adresse du marquage de section et le marquage de début (6) sont des systèmes de marquage séparés.

17. Dispositif selon la revendication 16, **caractérisé en ce que** l'adresse du marquage de section se trouve à proximité du marquage de début (6).

18. Dispositif selon l'une des revendications 1 à 15, **caractérisé en ce que** l'adresse du marquage de section et le marquage de début (6) forment un système de marquage uniforme.

19. Dispositif selon l'une des revendications 1 à 18, notamment en relation avec la revendication 17 ou 18, **caractérisé en ce que** l'adresse du marquage de section est un transpondeur (8), la première unité de palpage comprenant une antenne (9) et un lecteur de transpondeur (11).

20. Dispositif selon l'une des revendications 1 à 18, **caractérisé en ce que** l'adresse du marquage de section et/ou le marquage de début (6) est/sont formé(es) par au moins une encoche, une bande de couleur, une zone de réflexion, une particule de métal ou un aimant permanent.

21. Dispositif selon l'une des revendications 1 à 18, **caractérisé en ce que** l'adresse du marquage de section et/ou le marquage de début (6) sont un code, notamment dans la perspective d'une détection mécanique, optique, magnétique, électriquement conductrice ou radioactive.

22. Dispositif selon la revendication 21, **caractérisé en ce que** le code est un code à barres ou est structuré de manière similaire à un code à barres.

23. Dispositif selon la revendication 21, **caractérisé en ce que** le code se compose de petits aimants permanents, notamment sous la forme d'une disposition en série.

24. Dispositif selon l'une des revendications 20 à 23, **caractérisé en ce que** la première et la deuxième unité de palpage sont un système de détection commun, notamment sous la forme d'une tête de lecture (7).

25. Dispositif selon l'une des revendications 1 à 24, **caractérisé en ce que** celui-ci est doté d'un codeur (10).

26. Dispositif selon la revendication 25, **caractérisé en ce que** le codeur est entraîné par la bande transporteuse (1) elle-même.

27. Dispositif selon la revendication 25, **caractérisé en ce que** le codeur (10) est en liaison avec une partie mobile de l'équipement de convoyage qui englobe la bande transporteuse (1).

28. Dispositif selon la revendication 27, **caractérisé en ce que** le codeur (10) est entraîné par l'axe d'un cylindre (2) non entraîné.

29. Dispositif selon l'une des revendications 1 à 28, **caractérisé en ce que** l'ordinateur de traitement (15) est au moins connecté à la source de rayonnement (4), notamment à d'autres parties du dispositif du type mentionné.

30. Dispositif selon la revendication 29, **caractérisé en ce que** l'ordinateur de traitement (15) est connecté avec les parties suivantes du dispositif, à savoir :
- la source de rayonnement (4), notamment en relation avec la revendication 7, par le biais du contrôleur (12) ;
- le capteur de lignes (5) muni du processeur d'image ;
- le système de marquage des défauts (13), notamment en relation avec la revendication 12, par le biais du contrôleur (14) ;
- la première et la deuxième unité de palpage et
- le codeur (10).

31. Dispositif selon l'une des revendications 1 à 30, **caractérisé en ce que** l'ordinateur de traitement (15) est connecté à un moniteur (16).

32. Dispositif selon l'une des revendications 1 à 31, **caractérisé en ce qu'**il est prévu un dispositif de protection contre les rayonnements, qui est notamment disposé sur le bâti porteur (3) ou à proximité de celui-ci.
